# FASCICULE DE BREVET EUROPEEN

(11) **EP 1 041 277 B1**
(45) Date de publication et mention de la délivrance du brevet: **03.03.2004**
(21) Numéro de dépôt: 00106157.1
(22) Date de dépôt: 21.03.2000
(51) Int. Cl.: F02N 11/08, H02P 1/04, H02P 1/20

(54) **Dispositif de commande de démarreur de véhicule automobile protégeant ce dernier de l'usure**
Anlasser-Regelvorrichtung für Kraftfahrzeuge zur Verhinderung von Verschleiss
Vehicle starter control device for preventing wear

(30) Priorité: 31.03.1999 FR 9904055
(43) Date de publication de la demande: 04.10.2000
(73) Titulaire: VALEO EQUIPEMENTS ELECTRIQUES MOTEUR, 94017 Creteil Cedex (FR)
(72) Inventeur: Vilou, Gérard, 69160 Tassin La Demi Lune (FR)
(74) Mandataire: Gamonal, Didier

(56) Documents cités:
- EP-A- 0 727 577
- US-A- 4 305 002
- PATENT ABSTRACTS OF JAPAN vol. 011, no. 070 (E-485), 3 mars 1987 (1987-03-03) & JP 61 224887 A (TOSHIBA CORP), 6 octobre 1986 (1986-10-06)
- PATENT ABSTRACTS OF JAPAN vol. 017, no. 379 (M-1447), 16 juillet 1993 (1993-07-16) & JP 05 065861 A (HITACHI LTD), 19 mars 1993 (1993-03-19)

## Description

La présente invention est relative aux dispositifs de commande de démarreur de véhicule automobile.

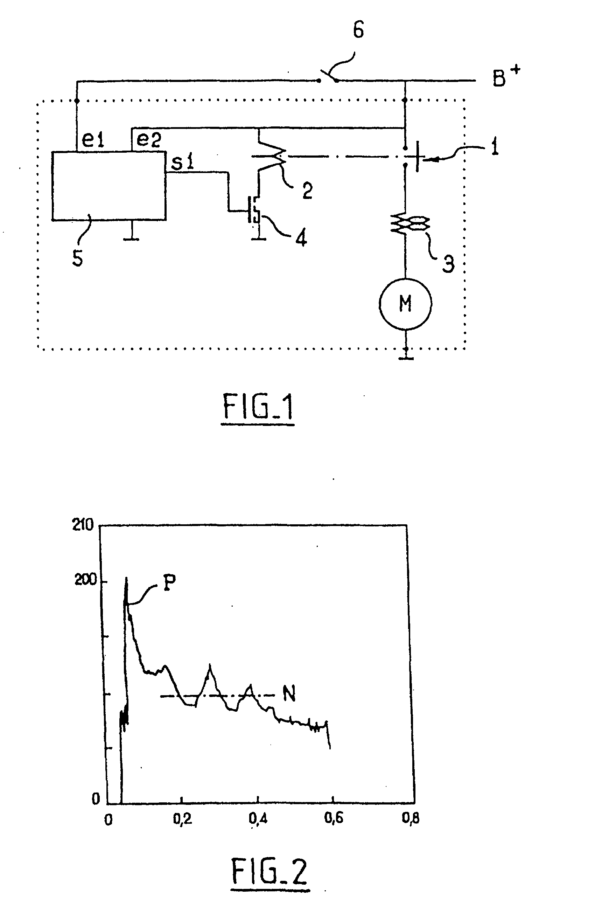

Tel qu'illustré sur la figure 1, un démarreur de l'état de la technique comporte un moteur électrique M placé en série avec un relais électromagnétique 1 entre la borne positive d'une batterie et la masse.

Le relais 1 est actionné par une bobine 2 montée en série avec un transistor 4 entre la borne positive de la batterie et la masse, le transistor 4 étant commandé par un organe de commande 5.

La bobine 2 a également pour fonction d'entraîner le pignon porté par l'arbre de sortie du moteur M, et destiné à coopérer avec l'engrenage de la couronne de démarrage du moteur thermique comme décrit par exemple dans les documents EP-A-0 727 577 et US-A-4,305,002.

Pour plus de précisions on se reportera à ces documents, sachant que classiquement la bobine est apte à actionner un noyau plongeur agissant sur le pignon via une fourchette ou en variante via un train d'engrenages formant réducteur.

Lorsqu'un interrupteur de clé de contact 6 disposé entre la borne positive de la batterie et une entrée e1 de l'organe de commande 5 est actionné par un utilisateur, l'organe 5 rend passant le transistor 4 relié à sa sortie s1, de sorte que la bobine 2 est alimentée, que le contact 1 se ferme, et que le courant commence à passer dans le moteur électrique M.

Ce moteur électrique est un moteur électrique de forte puissance et comporte un inducteur et un induit.

On a représenté sur la figure 2 l'évolution du courant traversant le moteur au démarrage de celui-ci. Au départ, le moteur M ne tourne pas et le courant dans le moteur croît rapidement car il est seulement limité par l'inductance et la résistance du moteur. En fonction de l'inertie du rotor du moteur M et des caractéristiques couple/vitesse du moteur, ce dernier prend progressivement de la vitesse. Une force contre-électromotrice s'oppose alors à la force motrice de la batterie, ce qui réduit le courant absorbé par le moteur M, qui retombe alors à un niveau moyen N qui dépend de la charge mécanique associée au moteur M.

On voit ainsi sur la figure 2 une pointe de courant initiale dans le moteur, suivie d'une phase d'entraînement stabilisé du moteur thermique, pendant laquelle le courant oscille légèrement autour d'une valeur moyenne N. En pratique, il est fréquent d'obtenir une pointe de courant supérieure à deux ou trois fois la valeur moyenne d'entraînement N.

Ces pointes de courant induisent des surtensions et des surintensités qui, par étincelage et arcs électriques, provoquent une usure importante des balais et du collecteur du moteur électrique, qui s'ajoute à l'usure produite lors de l'entraînement effectif du moteur thermique.

Dans le document US-A-4,305,002 on a proposé un dispositif permettant une alimentation plus progressive du moteur que celle fournie par les systèmes conventionnels.

Ce dispositif de commande du moteur électrique d'un démarreur de véhicule automobile, comporte des moyens pour réduire la tension d'alimentation dudit moteur électrique en début de démarrage, ces moyens comprennent une charge électrique, et un moyen commutateur apte :
- à appliquer cette charge à une source d'alimentation pendant une phase de début de démarrage, et ;
- à déconnecter cette charge après cette phase de début de démarrage.

Plus précisément dans une première phase le noyau plongeur se déplace et entraîne via une fourchette le pignon, tandis que le moteur électrique M est à l'arrêt.

Durant cette première phase un fort courant traverse la bobine comportant de manière connue un bobinage d'appel et un bobinage de maintien.

Dans une deuxième phase on réduit le courant dans la bobine et on établit des contacts pour alimenter le moteur électrique à travers une résistance en sorte que celui-ci tourne à une faible vitesse. Lors de cette deuxième phase le pignon vient en prise avec la couronne de démarrage et ce à faible vitesse.

A la fin de cette deuxième phase, le contact mobile du relais vient en prise avec les contacts fixes de ce relais en sorte que le moteur électrique est alimenté directement à pleine puissance par la batterie et que le bobinage d'appel est désactivé, seul le bobinage de maintien continuant à être activé.

Cette solution complique le relais car cela nécessite la présence d'un disque de contact et de contacts supplémentaires. En outre cela accroît le temps de commutation.

La présente invention a pour objet de pallier ces inconvénients.

Suivant l'invention ce problème est résolu par le fait que le dispositif de commande du moteur électrique du démarreur comporte un moyen apte à détecter la fin d'une pointe (ou pic) de courant dans le moteur électrique et à commander un changement d'état du moyen d'application de charge en cas d'une telle détection.

Ainsi on ne fait pas appel à l'actionnement mécanique d'un relais ce qui permet de supprimer le disque de contact de l'art antérieur et de simplifier le relais.

Le temps de commutation est plus court du fait que l'on détecte la fin d'une pointe de courant pour déconnecter la charge. La seconde pointe de courant qui se produit lors de la déconnexion de la charge a également une faible amplitude.

Grâce à l'invention la charge est active le temps nécessaire pour permettre au moteur, après la fin d'une pointe de courant, d'atteindre une vitesse réduite significative de sorte qu'après la déconnexion de la charge, la seconde pointe de courant est aussi de faible amplitude.

Avantageusement le moyen selon l'invention consiste en un module de détection de pic de courant.

Les balais et le collecteur du moteur électrique subissent donc encore moins d'usure, en sorte que la durée de vie du démarreur est encore augmentée.

En outre le relais est simplifié par rapport à celui du document US-A-4,305,002.

D'autres caractéristiques, buts et avantages de l'invention ressortiront encore de la description qui suit. Cette description est purement illustrative et non limitative. Elle doit être lue en regard des dessins annexés sur lesquels :
- la figure 1, déjà analysée, est un schéma fonctionnel d'un démarreur de véhicule automobile de l'art antérieur;
- la figure 2, déjà analysée, est un tracé représentant l'évolution du courant dans le moteur électrique de ce même démarreur au cours du démarrage de celui-ci;
- la figure 3 est un schéma fonctionnel représentant un démarreur selon l'invention, du type à charge supplémentaire placée en série avec le moteur ;
- la figure 4 est un schéma fonctionnel représentant un démarreur du même type selon l'invention, et dans lequel la charge supplémentaire et les moyens de commutation de cette charge forment un module situé à l'extérieur du démarreur ;
- la figure 5 est un schéma fonctionnel représentant un démarreur selon une variante de l'invention à charge supplémentaire placée en parallèle du moteur M ;
- la figure 6 est un schéma simplifié représentant fonctionnellement le dispositif de la figure 5;
- la figure 7 est un schéma fonctionnel représentant un démarreur selon l'invention à charge supplémentaire parallèle au moteur M, selon une autre variante ;
- la figure 8 est un schéma fonctionnel représentatif d'une autre variante d'un tel démarreur, dans laquelle la charge supplémentaire et son circuit de commutation forment un module externe au reste du démarreur ;
- la figure 9 est un organigramme qui illustre différentes étapes mises en oeuvre par un dispositif conforme à ceux des figures 3 et 4 ;
- la figure 10 est un organigramme qui illustre différentes étapes mises en oeuvre par un dispositif conforme à ceux des figures 5 à 8.

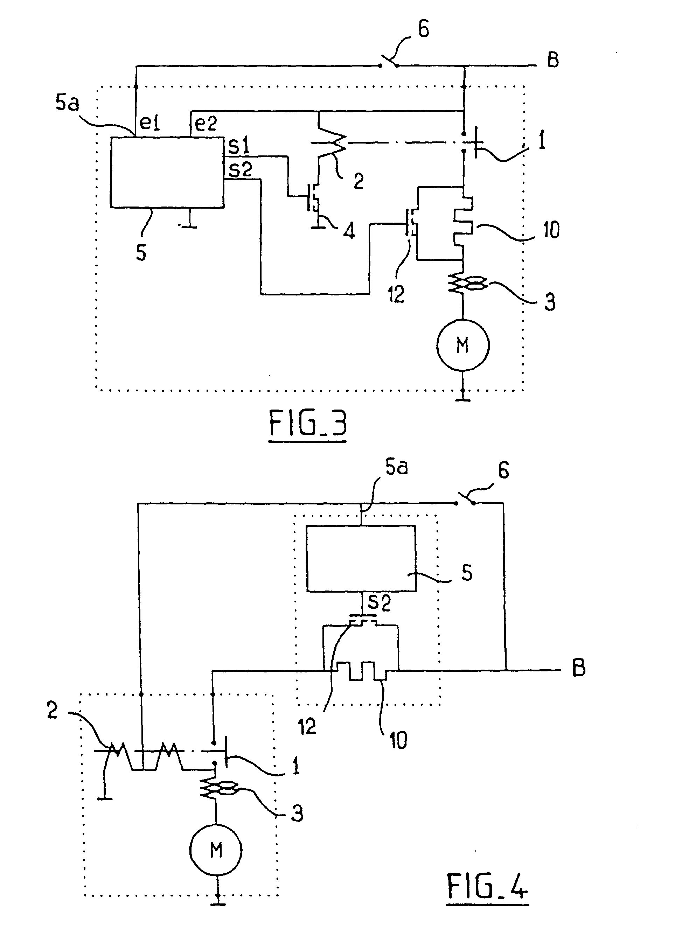

Tel que représenté à la figure 3, le démarreur selon l'invention se différencie essentiellement du démarreur connu de la figure 1 par le fait qu'il comporte en série entre le contacteur 1 et le moteur M, une résistance 10 en parallèle avec un transistor 12 formant commutateur. Ce transistor est par exemple du type MOSFET et présente de manière connue une grille, une source et un drain.

La grille de ce transistor 12 est connectée à une sortie s2 de l'unité de commande 5, de sorte que l'unité 5 commande l'ouverture et la fermeture du transistor 12. Ainsi, selon le niveau de tension appliqué sur sa sortie, l'unité 5 commande donc l'application ou non d'une charge supplémentaire en série avec le moteur M.

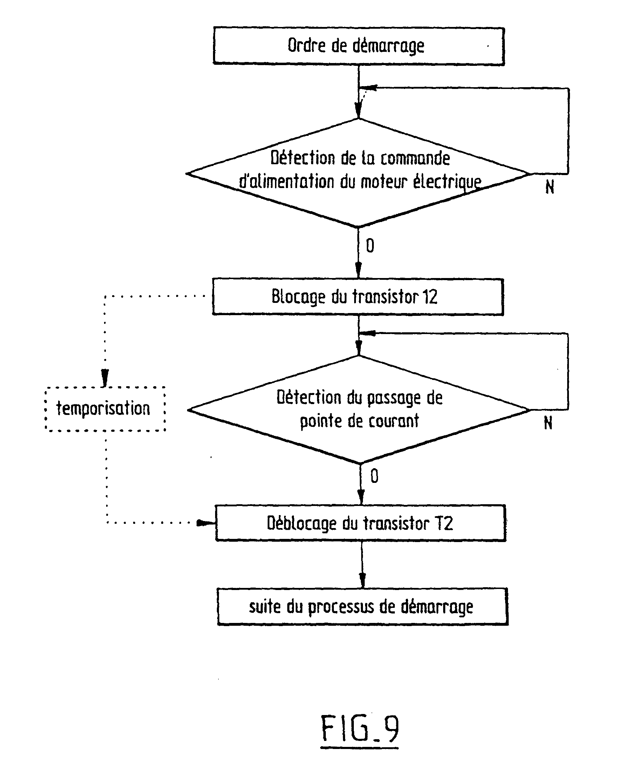

Plus précisément, le démarreur de la figure 3 fonctionne de la manière suivante, illustrée par l'organigramme de la figure 9.

La présente unité 5 est un microprocesseur muni de moyens pour identifier l'apparition d'un niveau de tension prédéterminé sur le câble qui relie la batterie à l'unité 5 par l'intermédiaire de l'interrupteur de contact 6.

Lorsqu'un utilisateur actionne la clé de contact, le circuit de commande 5 détecte sur son entrée e1 un niveau de tension élevé qu'il interprète comme un ordre de démarrage.

Selon d'autres variantes, l'ordre de démarrage peut être détecté par le circuit 5 par l'apparition d'un niveau d'intensité ou de tension de la bobine de contacteur 2, ou encore par l'apparition d'un niveau de tension ou de courant sur la branche portant le moteur M, détecté par exemple par l'apparition d'un niveau de tension sur une seconde entrée e2 de l'unité de commande 5.

L'unité 5 applique alors sur la grille du transistor 12 une tension continue apte à le maintenir à l'état bloquant 12, puis commande l'alimentation de la bobine de contacteur 2 par mise à l'état passant du transistor 4, de sorte que la branche portant en série la résistance 10 et le moteur M se voit soumise à la tension de batterie.

Le courant d'alimentation du moteur électrique passe donc par ces deux éléments, de sorte que le moteur M voit à ses bornes une tension inférieure à celle qu'il recevrait en l'absence de la résistance 10.

Le moteur, ainsi alimenté sous tension réduite, absorbe, au début de la mise en rotation, une pointe de courant qui est nettement moins élevée par rapport à celle qu'il absorbe au démarrage avec le dispositif connu de la figure 1.

Après passage de cette légère pointe de courant, l'induit du moteur M se trouve en rotation à vitesse faible.

Un module de détection du passage de ce pic, activé dans l'unité 5 après détection de l'ordre de démarrage, et qui fonctionne par comparaison de la tension aux bornes du moteur avec un seuil préenregistré, identifie selon l'invention la fin du pic ou pointe de courant lorsque la tension aux bornes du moteur passé en dessous de ce seuil.

Selon une variante, ce module de détection de fin de pic compare l'intensité traversant le moteur M à un niveau préenregistré.

Lorsque le passage de cette pointe de courant a été diagnostiqué, le circuit 5 alimente la grille du transistor 12 selon une tension continue qui fait passer et maintient le transistor à l'état passant, de sorte que la résistance 10 se trouve court-circuitée et que le moteur M se trouve alimenté à pleine puissance.

Un second pic d'intensité prend alors place dans le moteur M, d'amplitude faible du fait que le moteur est ici déjà en rotation lorsque la pleine tension de batterie lui est appliquée.

Avantageusement, l'unité 5 comprend alors des moyens pour adapter cette durée en fonction de l'intensité ou de la tension disponible en sortie de la batterie, ou encore en fonction de la température, de façon à s'assurer que la pointe du courant est bien passée avant le déblocage du transistor 12, malgré d'éventuelles variations de ces différents paramètres influant sur le temps de mise en rotation du moteur électrique.

La résistance 10 peut être remplacée par un bobinage additionnel au bobinage d'inducteur ou par un couple formé d'une résistance et d'un bobinage en série. Dans ce dernier cas, on obtient un couple disponible qui est plus important au cours de la phase de blocage du transistor 12.

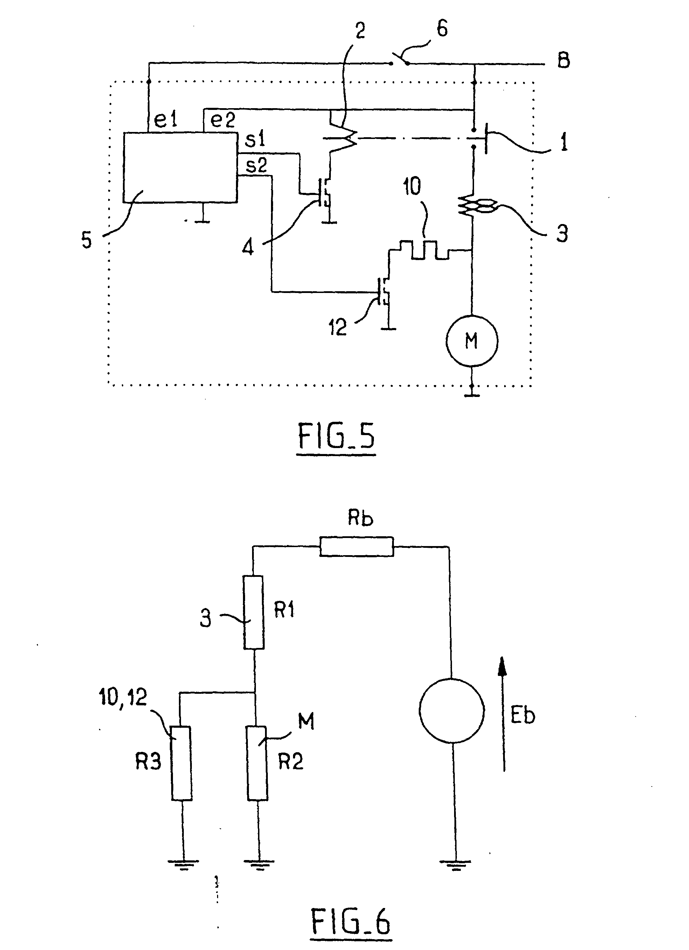

On a représenté à la figure 5 un variante de démarreur selon l'invention dans laquelle une charge additionnelle 10, appliquée à la batterie en début de démarrage, est placée en parallèle du moteur électrique.

Pour cela, le circuit de la figure 5 présente sur une branche de dérivation parallèle au moteur, une résistance 10 en série avec un transistor 12 relié par sa grille à l'unité de commande 5.

Dans une phase initiale de démarrage du moteur M, dont l'ordre de mise en oeuvre ainsi que la fin sont identifiées par l'unité 5, le transistor 12 est maintenu passant, de sorte que la batterie alimente alors un ensemble de deux charges, le couple moteur M et la résistance 10 tel qu'illustré à la figure 6.

Sur la figure 6, Eb et Rb sont la force électromotrice et la résistance interne de la batterie R1, la résistance de l'inducteur 3 du moteur M, R2 la résistance de l'induit du moteur M, et R3 la résistance du circuit de dérivation formé par la résistance 10 et le transistor 12.

La mise en équation de ce circuit montre que le coefficient de réduction K du courant, c'est à dire le rapport entre le courant sans circuit de dérivation R3 et le courant avec circuit de dérivation, est, quand le rotor est encore à l'arrêt, K = 1 + R2(R1 + Rb)/R3(Rb+R1+R2). Le rapport K est bien supérieur à 1 pour toute valeur finie de R3.

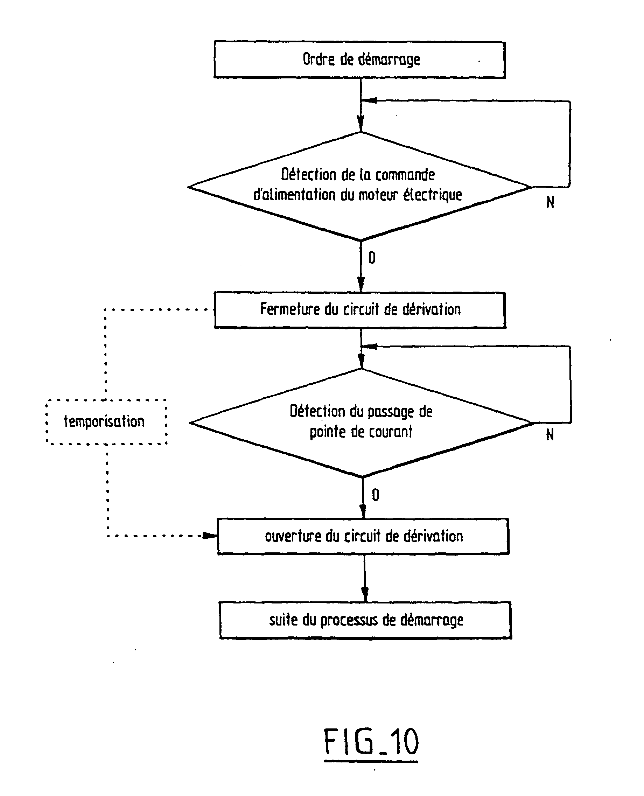

Le présent dispositif tel que représenté à la figure 5 fonctionne selon une série d'étapes représentées sur l'organigramme de la figure 10.

Après détection de l'ordre de démarrage, l'unité 5 applique sur la grille du transistor 12 une tension continue apte à le maintenir à l'état passant, puis commande l'alimentation de la bobine de contacteur 2 par mise à l'état passant du transistor 4, de sorte que les charges 10 et M se voient alimentées par la batterie. Le moteur M voit à ses bornes une tension inférieure à celle qu'il recevrait en l'absence de la résistance 10.

Le moteur, ainsi alimenté sous tension réduite, absorbe une pointe de courant de faible amplitude, suffisante pour donner au moteur M une vitesse de rotation faible.

Un module de l'unité 5, prévu selon l'invention pour détecter la fin du pic, qui est similaire à celui du dispositif de la figure 3, identifie la fin de pic de sorte que l'unité 5 alimente alors la grille du transistor 12 selon une tension continue de passage et maintien à l'état bloquant. La dérivation de courant dans la résistance 10 est alors supprimée de sorte que le moteur est alimenté à pleine puissance.

Un second pic d'intensité prend alors place dans le moteur M, d'amplitude faible du fait que le moteur est déjà en rotation lorsque la pleine puissance de batterie lui est appliquée et que l'on détecte la fin du premier pic.

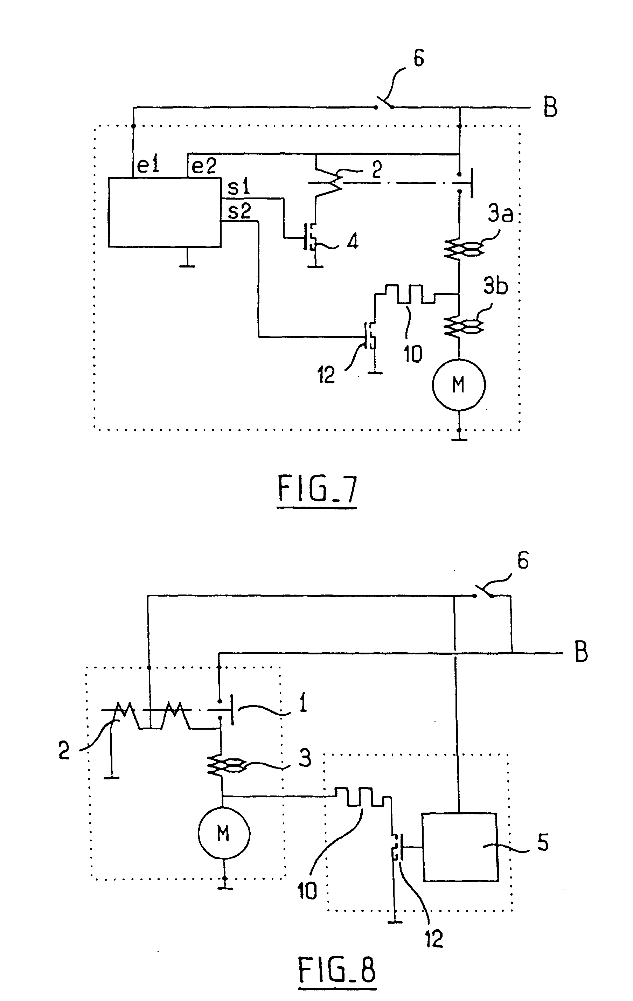

Selon une variante représentée sur la figure 7, où le moteur M comporte plusieurs bobines d'inducteur 3a et 3b, la branche de dérivation peut s'étendre à partir d'un point situé entre ces deux bobines d'inducteur 3a et 3b.

Selon une variante, la résistance de dérivation 10 peut être formée par la propre résistance interne du commutateur 12. La résistance peut également être la résistance d'un bobinage travaillant comme enroulement shunt. Dans ce cas, un flux additionnel prend place dans la branche de dérivation qui donne un couple supplémentaire qui permet une mise en rotation plus rapide de l'induit et contribue à minimiser la pointe de courant.

Dans les exemples de réalisation décrits, le transistor 12 peut également être alimenté par une rampe de tension de grille apte à le faire passer de l'état bloqué à l'état passant de manière progressive. Une telle rampe de tension peut fournir une tension continue variable ou une tension hachée à rapport cyclique variable.

Le commutateur 12 peut être un relais électromécanique,

Le contacteur 1 peut être constitué par un commutateur électronique ou être, de manière traditionnelle, un contacteur à double bobinage.

Tel qu'illustré aux figures 4 et 8, le circuit formé par la résistance 10, le commutateur 12 et leur circuit de commande associé 5 peuvent constituer un ensemble placé à l'extérieur du démarreur.

Les différents dispositifs présentés ici permettent d'utiliser des batteries de très forte puissance sans endommager le démarreur grâce à la mise en tension progressive du moteur M.

Les moyens mis en oeuvre ici permettent plus généralement une réduction de l'usure des balais et collecteurs par arcs électriques lors de la fermeture du contacteur 1 ainsi qu'une réduction des contraintes mécaniques des différents sous-ensembles compris entre le moteur M et son pignon de sortie lors de la mise en rotation du démarreur.

De tels dispositifs à insertion d'une charge par commutation commandée avec le moteur M sont particulièrement utiles dans le cas d'une utilisation en «stop and go», c'est à dire dans le cas d'un véhicule comportant des moyens d'arrêt automatique de son moteur thermique à l'immobilisation du véhicule et comportant des moyens de détection et de redémarrage répondant à une manifestation du conducteur d'un souhait de rouler à nouveau.

Selon une variante représentée en pointillés dans les organigrammes des figures 9 et 10, le passage à pleine puissance peut être déclenchée après une durée fixe (temporisation) après le blocage du transistor 12.

Cette durée est indexée par rapport à un niveau d'intensité ou de tension correspondant à la détection de la fin d'une pointe de courant

## Revendications

1. Dispositif de commande du moteur électrique (M) d'un démarreur de véhicule automobile, comportant des moyens pour réduire la tension d'alimentation dudit moteur électrique (M) en début de démarrage, ces moyens comprenant une charge électrique (10), et un moyen (5,12) apte :
- à appliquer cette charge (10) à une source d'alimentation (B) du moteur (M) pendant une phase de début de démarrage, et ;
- à déconnecter cette charge (10) après cette phase de début de démarrage, **caractérisé en ce qu'**il comporte un moyen (5) apte à détecter la fin d'une pointe de courant de ce moteur électrique (M) et à commander un changement d'état du moyen (5,12) d'application de la charge (10) en cas d'une telle détection.

2. Dispositif selon la revendication 1, **caractérisé en ce que** ladite charge électrique (10) est placée en parallèle du moteur (M).

3. Dispositif selon la revendication 2, **caractérisé en ce que** le moyen (5, 12) d'application de la charge (10) comprend un commutateur (12) placé en série avec ladite charge (10).

4. Dispositif selon la revendication 2 ou 3, **caractérisé en ce que** ladite charge (10) est placée sur une branche parallèle au moteur (M) qui s'étend à partir d'un point situé entre un inducteur (3) et l'induit du moteur (M).

5. Dispositif selon l'une quelconque des revendications 1 à 4, **caractérisé en ce que** la charge (10) est placée sur une branche qui s'étend à partir d'un point situé entre deux bobines d'inducteur (3a, 3b) du moteur (M).

6. Dispositif selon la revendication 1, **caractérisé en ce que** ladite charge (10) est placée en série avec le moteur (M).

7. Dispositif selon la revendication 6, **caractérisé en ce que** le moyen (5,12) d'application de la charge (10) comprend un commutateur (12) placé en parallèle avec ladite charge (10).

8. Dispositif selon la revendication précédente, **caractérisé en ce que** le moyen de détection (5) comprend un moyen de mesure de la tension et/ou de l'intensité du moteur (M) et des moyens de comparaison de cette tension et/ou de cette intensité à un seuil.

9. Dispositif selon l'une des revendications précédentes, **caractérisé en ce qu'**il comprend des moyens pour commander automatiquement un arrêt du moteur thermique du véhicule lors d'une immobilisation du véhicule et des moyens de détection d'une volonté de rouler à nouveau du conducteur.

## Patentansprüche

1. Vorrichtung zur Steuerung des Elektromotors (M) eines Kraftfahrzeuganlassers mit Mitteln zur Reduzierung der Speisespannung des besagten Elektromotors (M) am Anfang des Anlaßvorgangs, wobei diese Mittel einen elektrischen Verbraucher (10) und ein Mittel (5, 12) umfassen, das in der Lage ist:
- an diesen Verbraucher (10) eine Spannungsquelle (B) des Elektromotors (M) während einer Anfangsphase des Anlaßvorgangs anzulegen und
- diesen Verbraucher (10) nach dieser Anfangsphase des Anlaßvorgangs abzuschalten, **dadurch gekennzeichnet, daß** sie ein Mittel (5) umfaßt, das in der Lage ist, das Ende einer Stromspitze dieses Elektromotors (M) zu erfassen und eine Zustandsänderung des Mittels (5, 12) zum Anlegen des Verbrauchers (10) im Falle einer solchen Erfassung zu steuern.

2. Vorrichtung nach Anspruch 1, **dadurch gekennzeichnet, daß** der besagte elektrische Verbraucher (10) mit dem Elektromotor (M) parallel geschaltet ist.

3. Vorrichtung nach Anspruch 2, **dadurch gekennzeichnet, daß** das Mittel (5, 12) zum Anlegen des Verbrauchers (10) einen Schalter (12) umfaßt, der mit dem besagten Verbraucher (10) in Reihe geschaltet ist.

4. Vorrichtung nach Anspruch 2 oder 3, **dadurch gekennzeichnet, daß** der besagte Verbraucher (10) an einem mit dem Elektromotor (M) parallel geschalteten Strang geschaltet ist, der sich von einem Punkt aus erstreckt, der sich zwischen einer Erregerwicklung (3) und dem Anker des Elektromotors (M) befindet.

5. Vorrichtung nach einem der Ansprüche 1 bis 4, **dadurch gekennzeichnet, daß** der Verbraucher (10) an einem Strang geschaltet ist, der sich von einem Punkt aus erstreckt, der sich zwischen zwei Erregerspulen (3a, 3b) des Elektromotors (M) befindet.

6. Vorrichtung nach Anspruch 1, **dadurch gekennzeichnet, daß** der besagte Verbraucher (10) mit dem Elektromotor (M) in Reihe geschaltet ist.

7. Vorrichtung nach Anspruch 6, **dadurch gekennzeichnet, daß** das Mittel (5, 12) zum Anlegen des Verbrauchers (10) einen Schalter (12) umfaßt, der mit dem besagten Verbraucher (10) parallel geschaltet ist.

8. Vorrichtung nach dem vorangehenden Anspruch, **dadurch gekennzeichnet, daß** das Erfassungsmittel (5) ein Mittel zur Messung der Spannung und/oder der Stromstärke des Elektromotors (M) und Mittel zum Vergleichen dieser Spannung und/oder dieser Stromstärke mit einem Schwellenwert umfaßt.

9. Vorrichtung nach einem der vorangehenden Ansprüche, **dadurch gekennzeichnet, daß** sie Mittel, um automatisch ein Abstellen des Verbrennungsmotors des Fahrzeugs bei einem Anhalten des Fahrzeugs zu veranlassen, und Mittel zur Erfassung einer Absicht zum Weiterfahren seitens des Fahrers umfaßt.

## Claims

1. Device for controlling the electric motor (M) of a motor vehicle starter, comprising means for reducing the supply voltage to the said electric motor (M) at the beginning of starting, these means comprising an electrical load (10), and a means (5, 12) able:
- to apply this load (10) to a supply source (B) of the motor (M) during a beginning of starting phase, and;
- to disconnect this load (10) after this beginning of starting phase, **characterised in that** it comprises a means (5) able to detect the end of a current peak of this electric motor (M) and to demand a change in state of the means (5, 12) of applying the load (10) in the event of such a detection.

2. Device according to Claim 1, **characterised in that** the said electrical load (10) is placed in parallel to the motor (M).

3. Device according to Claim 2, **characterised in that** the means (5, 12) of applying the load (10) comprises a switch (12) placed in series with the said load (10).

4. Device according to Claim 2 or 3, **characterised in that** the said load (10) is placed on a branch parallel to the motor (M) which extends from a point situated between an inductor (3) and the armature of the motor (M).

5. Device according to any one of Claims 1 to 4, **characterised in that** the load (10) is placed on a branch which extends from a point situated between two inductor coils (3a, 3b) of the motor (M).

6. Device according to Claim 1, **characterised in that** the said load (10) is placed in series with the motor (M).

7. Device according to Claim 6, **characterised in that** the means (5, 12) of applying the load (10) comprises a switch (12) placed in parallel with the said load (10).

8. Device according to the preceding claim, **characterised in that** the detection means (5) comprises a means of measuring the voltage and/or the current of the motor (M) and means of comparing this voltage and/or current with a threshold.

9. Device according to one of the preceding claims, **characterised in that** it comprises means for automatically demanding a stoppage of the thermal engine of the vehicle when the vehicle is stopped and means of detecting an intention of the driver to drive once again.
